# EUROPÄISCHE PATENTSCHRIFT

(11) **EP 3 438 632 B1**
(45) Veröffentlichungstag und Bekanntmachung des Hinweises auf die Patenterteilung: **07.10.2020**
(21) Anmeldenummer: 18186949.6
(22) Anmeldetag: 02.08.2018
(51) Int. Cl.: G01M 1/04, G01M 1/06, G01D 5/24, H02K 15/16, H03K 17/955

(54) **ANTRIEBSEINRICHTUNG FÜR EINE AUSWUCHTMASCHINE SOWIE AUSWUCHTMASCHINE**
BALANCING MACHINE AND A DRIVE DEVICE FOR A BALANCING MACHINE
DISPOSITIF D'ENTRAÎNEMENT POUR UNE MACHINE D'ÉQUILIBRAGE AINSI QUE MACHINE D'ÉQUILIBRAGE

(30) Priorität: 04.08.2017 DE 102017007328
(43) Veröffentlichungstag der Anmeldung: 06.02.2019
(73) Patentinhaber: Schenck RoTec GmbH, 64293 Darmstadt (DE)
(72) Erfinder: Hof, Nicole, 64380 Roßdorf (DE); Koch, Paul, 64347 Griesheim (DE)
(74) Vertreter: Haarpatent Patentanwälte Krämer Meyer

(56) Entgegenhaltungen:
- JP-A- 2001 033 339
- US-A- 2 464 662
- US-A- 3 589 203
- US-A- 5 235 854
- US-A1- 2008 191 646

## Beschreibung

Die Erfindung betrifft eine Antriebseinrichtung für eine Auswuchtmaschine zum Antreiben einer Rotationsbewegung eines um eine Rotationsachse rotierbar gelagerten Werkstückes mittels eines umlaufenden Riemens, wobei die Antriebseinrichtung einen eine Lagerposition für das Werkstück queraxial zu der Rotationsachse wenigstens teilweise umschließenden Rahmen umfasst, wobei der Rahmen eine mittels eines Bügels verschließbare Öffnung, durch die die Lagerposition zugänglich ist, aufweist, wobei die Antriebseinrichtung an dem Rahmen und/oder dem Bügel angeordnete Führungsvorrichtungen umfasst, um den Riemen derart zu führen, dass ein in der Lagerposition befindliches Werkstück an einem zylindrischen Umfangsbereich bei geschlossenem Bügel von dem Riemen wenigstens teilweise umschlungen wird und wobei die Antriebseinrichtung ferner eine Antriebsvorrichtung für den Riemen aufweist.

Die Erfindung betrifft des Weiteren eine Auswuchtmaschine zum Auswuchten eines Werkstücks umfassend eine Lagereinrichtung, um das Werkstück in einer Lagerposition um eine Rotationsachse rotierbar zu lagern, sowie eine Antriebseinrichtung.

Auswuchtmaschinen zum Auswuchten von Werkstücken sind bereits vielfältig im Stand der Technik bekannt. Eine geltungsgemäße Auswuchtmaschine ist beispielsweise in JP 2001-33339 A beschrieben. Dabei wird in der Regel das auszuwuchtende Werkstück, oft auch als Rotor bezeichnet, mittels eines geeigneten Antriebs in Rotation versetzt und sensorisch hinsichtlich von Unwuchten untersucht. Ebenfalls bekannt sind verschiedene Antriebskonzepte, beispielsweise angetriebene Wellen, die mit dem Rotor verbunden werden, oder umlaufende Riemen, die an einem Außenumfang des Rotors angreifen.

Bei den sogenannten Riemen- oder Bandantrieben sind einerseits Systeme bekannt, bei denen der Riemen tangential zum Rotor geführt wird und entsprechend quasi punktuell, d.h. nur über einen sehr geringen Winkelbereich des jeweiligen Rotorumfangs, am Rotor anliegt. Bei einer weiteren Klasse bekannter Riemenantriebe umschlingt der Riemen den Rotor und liegt entsprechend in einem großen Bereich des Rotorumfangs am Rotor an. Ausschließlich letztere Klasse an Riemenantrieben ist gattungsgemäß für die Erfindung.

Bei gattungsgemäßen Antrieben mit umschließenden Riemen stellt sich regelmäßig das Problem, dass der Riemen beim Wechsel des Werkstückes, das bis hin zum halben Umfang vom Riemen umschlungen wird, im Weg ist. Im Stand der Technik sind daher Riemenantriebe bekannt, bei denen der Riemen mittels eines schwenkbaren Arms um das Werkstück gelegt bzw. von dem Werkstück abgehoben werden kann.

Grundsätzlich ist es wünschenswert, möglichst viele Werkstücke in möglichst kurzer Zeit mit möglichst hoher Präzision auszuwuchten, wobei gleichzeitig erstrebenswert ist, ein und dieselbe Maschine für ein möglichst breites Spektrum an verschiedenen Werkstücken einsetzen zu können. Dies stellt hohe Anforderungen an Varianz und Stabilität sowie Reproduzierbarkeit der Einstellmöglichkeiten, sowie an Handhabung und Ergonomie, die bestehende Systeme bisher nur unzureichend erfüllen.

Aus US 2008/0191646 A1 ist eine Antriebseinrichtung für eine Auswuchtmaschine bekannt, bei der an einem Träger zwei Arme schwenkbar gelagert sind, die sich in symmetrischer Anordnung beiderseits der Rotationsachse erstrecken und an ihren freien Enden Führungsrollen für den umlaufenden Antriebsriemen tragen. Der Träger und die beiden schwenkbaren Arme bilden die hierbei zwar einen die Rotationsachse wenigstens teilweise umschließenden Rahmen mit einer Öffnung, durch die die Lagerposition zugänglich ist. Diese Öffnung ist aber nicht mittels eines Bügels verschließbar,

US 3 589 203 A und US 2 464 662 A offenbaren Antriebseinrichtungen, bei denen der Antriebsmotor und die Führungsvorrichtungen für einen umlaufenden Riemen an einem schwenkbar um eine zur Rotationsachse parallele Achse gelagerten Bügel angeordnet sind. Zum Antreiben wird der Bügel über das drehbar gelagerte Werkstück geschwenkt, wobei sich der Riemen auf das Werkstück auflegt und dieses teilweise umschlingt. Für das Einlegen des Werkstücks in die Lagerposition muss die gesamte Führungsvorrichtung von der Lagerposition abgeschwenkt und zur Seite bewegt werden.

Bei einer aus US 5 235 854 A bekannten Antriebseinrichtung ist ein umlaufender Riemen um an den Enden eines Arms angeordneten Rollen geführt. Der Arm ist an einem Träger um eine zur Rotationsachse parallele Achse drehbar gelagert und über das in Lagerposition befindliche Werkstück und in eine die Lagerposition frei gebende seitlich Position schwenkbar. Ein an dem Träger angebrachter Antriebsmotor treibt mittels eines Riementriebs eine der Rollen an.

Der Erfindung liegt die Aufgabe zugrunde, wenigstens einige dieser Aspekte gegenüber bekannten Lösungen zu verbessern.

Diese Aufgabe wird erfindungsgemäß gelöst durch eine Antriebseinrichtung für eine Auswuchtmaschine zum Antreiben einer Rotationsbewegung eines um eine Rotationsachse rotierbar gelagerten Werkstückes mittels eines umlaufenden Riemens, wobei die Antriebseinrichtung einen eine Lagerposition für das Werkstück queraxial zu der Rotationsachse wenigstens teilweise umschließenden Rahmen umfasst, wobei der Rahmen eine mittels eines Bügels verschließbare Öffnung, durch die die Lagerposition zugänglich ist, aufweist, wobei die Antriebseinrichtung an dem Rahmen und/oder dem Bügel angeordnete Führungsvorrichtungen umfasst, um den Riemen derart zu führen, dass ein in der Lagerposition befindliches Werkstück an einem zylindrischen Umfangsbereich bei geschlossenem Bügel von dem Riemen wenigstens teilweise umschlungen wird und wobei die Antriebseinrichtung ferner eine Antriebsvorrichtung für den Riemen aufweist, wobei die erfindungsgemäße Antriebseinrichtung dadurch weitergebildet ist, dass der Bügel zwischen einer Offenstellung und einer Schließstellung verschiebbar am Rahmen gehaltert ist.

Der Riemen ist dabei in der Regel zu Austauschzwecken demontierbar. Die Erfindung bezieht sich daher ausdrücklich neben einer betriebsbereiten Antriebseinrichtung auch auf eine erfindungsgemäße Antriebseinrichtung mit demontiertem Riemen.

Ein Vorteil der Erfindung besteht darin, dass der erfindungsgemäß verschiebbare Bügel im Gegensatz zu den bekannten Schwenk- oder Klappbügeln nicht angehoben werden muss. Insbesondere ermöglicht die Erfindung auch eine leichte Betätigung des Bügels mit wenig Kraftaufwand und kurzen Betätigungswegen. Hierdurch wird die Ergonomie erheblich verbessert und die Taktzeit zum Wechseln des Werkstückes reduziert.

Eine bevorzugte Weiterbildung der Erfindung ist dadurch ausgezeichnet, dass eine Massenverteilung des Bügels und aller mit dem Bügel mitbewegbarer Bauteile der Antriebseinrichtung derart ausbalanciert sind, dass ein aufgrund der Massenverteilung wirkendes Gravitationsmoment nicht ausreicht, um eine einem Verschieben des Bügels entgegenwirkende Reibungskraft zu überwinden.

Unter Reibung oder Reibungskraft wird in diesem Zusammenhang insbesondere eine Haftreibung bei dem in beliebiger Position stehenden Bügel und/oder eine Gleitreibung bei dem bewegten Bügels verstanden.

Dadurch wird vorteilhafterweise eine unbeabsichtigte und/oder unkontrollierte und/oder eigenständige Bewegung des Bügels verhindert und die Bediensicherheit erhöht. Gleichzeitig wird dies mit Vorteil für die Ergonomie auch ohne Dämpfungs- oder Bremselemente erreicht, die den zum Bewegen des Bügels erforderlichen Kraftaufwand erhöhen.

Die Führungsvorrichtungen sind dabei beispielsweise jeweils als Umlenkrollen für den Riemen ausgebildet. Wenn die Umlenkrollen darüberhinaus Haltevorrichtungen, beispielsweise Leitbleche, aufweisen, wird wirksam ein Abspringen des Riemens von den Umlenkrollen verhindert und die Betätigung der erfindungsgemäßen Antriebseinrichtung weiter vereinfacht.

Wenn eine erste der Führungsvorrichtungen am Bügel angeordnet ist und eine zweite die Führungsvorrichtungen am Rahmen angeordnet ist, wobei insbesondere der bestimmungsgemäß eingesetzte Riemen bei geschlossenem Bügel zwischen der ersten Führungsvorrichtung und der zweiten Führungsvorrichtung über das bestimmungsgemäß gelagerte Werkstück geführt wird, wird vorteilhafterweise erreicht, dass der Riemen beim Öffnen des Bügels die Lagerposition für das Bauteil ohne weiteren Eingriff freigibt, so dass ein Bauteil ohne Weiteres in die Lagerposition eingelegt oder aus dieser entnommen werden kann. Mit dem Schließen des Bügels wird dann der Riemen ohne weiteren Eingriff um das Bauteil gelegt, so dass die erfindungsgemäße Antriebseinrichtung unmittelbar nach Schließen des Bügels einsatzbreit ist.

Zum Festsetzen des geschlossenen Bügels ist beispielsweise eine Arretierungsvorrichtung vorgesehen. Eine besonders einfach konstruierte und gleichzeitig leicht handhabbare Arretierungsvorrichtung weist dabei einen Exzenterspannhebel auf, um den geschlossenen Bügel reibschlüssig am Rahmen lösbar festzusetzen.

Zur Anpassung an unterschiedliche Rotordurchmesser umfasst eine erfindungsgemäße Antriebseinrichtung vorteilhafterweise eine Spannvorrichtung für den Riemen. Dadurch kann ein Riemen mit vorgegebener Länge für ein breites Spektrum an Rotordurchmessern eingesetzt werden, so dass die Rüstzeit zum Wechseln des Riemens beim Wechsel des Werkstücks entfällt.

Die Spannvorrichtung ist dabei vorzugsweise am Rahmen angeordnet, um Masse an dem Bügel einzusparen, die sonst beim Öffnen und Schließen des Bügels mitbewegt werden müsste. Auch hierdurch werden die Ergonomie verbessert und Taktzeiten verringert.

Für die Qualität der Auswuchtergebnisse hat es sich als besonders vorteilhaft erwiesen, wenn der Riemen von unten lotrecht über das Werkstück verläuft und auf der anderen Seite wieder lotrecht nach unten vom Werkstück abläuft. Um eine derartige Riemenführung für verschiedene Durchmesser des Werkstücks zu ermöglichen, ist die zweite Führungsvorrichtungen vorteilhaft lageveränderbar am Rahmen angeordnet. Die erste Führungsvorrichtung ist beispielsweise lageveränderbar am Bügel angeordnet. Zusätzlich oder alternativ dazu ist besonders vorteilhaft die Schließstellung des Bügels einstellbar ausgebildet. Eine Reproduzierbarkeit der Schließstellung wird dabei beispielsweise mittels eines lageveränderbaren Anschlags ermöglicht.

Eine besonders bevorzugte Ausführungsform der Erfindung ist dadurch gekennzeichnet, dass am Rahmen eine kreisbogenförmige Schiebeführung für den Bügel vorgesehen ist. Hierdurch wird ein besonders kurzer Betätigungsweg für den Bügel ermöglicht. Des Weiteren wird eine besonders kompakte Bauform der erfindungsgemäßen Antriebseinrichtung mit minimierten Bauraumanforderungen ermöglicht, weil der Bügel in jeder Stellung eine signifikante Überdeckung mit dem Rahmen aufweist. Ein Weiterer Vorteil ist außerdem, dass bei geöffnetem Bügel kein oder kaum zusätzlicher Bauraum gegenüber dem geschlossenen Bügel erforderlich ist.

Durch die kreisbogenförmige Schiebeführung und einer entsprechend gebogener Grundform des Bügels ergibt sich ein Schwerpunkt des Bügels nahe am Zentrum der Kreisbahn. Aufgrund des dadurch verringerten Hebels wirken unabhängig vom tatsächlichen Gewicht des Bügels nur geringe Gravitationsmomente, die durch eine ausgeglichene Massenverteilung am Bügel noch weiter reduziert werden können. So wird durch die Erfindung ermöglicht, dass die Reibung auch einer sehr leichtgängigen Lagerung des Bügels an der Schiebeführung bereits ausreicht, um eine unbeabsichtigte und eigenständige Bewegung des Bügels wirksam zu unterbinden. Dadurch ergibt sich ein intrinsisches Sicherheitsmoment bezüglich Verletzungen, insbesondere Quetschverletzungen, auch ohne entsprechende Sicherheitsvorkehrungen wie beispielsweise Dämpfungselementen oder sonstigen Bremsvorrichtungen am Bügel.

Eine in dieser Hinsicht besonders vorteilhafte Ausführungsform der Erfindung ist dadurch ausgezeichnet, dass der Rahmen und der Bügel die Lagerposition für das Werkstück im Wesentlichen konzentrisch zur Rotationsachse umschließen.

Wenn eine weitere Führungsvorrichtung am Bügel angeordnet ist, wobei insbesondere die erste Führungsvorrichtung und die weitere Führungsvorrichtung an gegenüberliegenden Bereichen des Bügels angeordnet sind, wird zusätzlich zu den genannten Vorteilen außerdem ermöglicht, dass der Riemen beim Öffnen des Bügels durch die weitere Führungsvorrichtung mitgenommen und lose gespannt wird. Dies verhindert ein allzu starkes Durchhängen des Riemens und verhindert wirksam, dass der Riemen beim Bewegen des Bügels unbeabsichtigt verhakt oder sonst eine Störung an der Riemenführung auftritt. Hierdurch wird die Handhabung weiter vereinfacht und die Taktzeit weiter reduziert, weil manuelle Eingriffserfordernisse zur Korrektur der Riemenführung entfallen.

Aus geometrischen Gesichtspunkten hat es sich bei der beschriebenen konzentrischen Anordnung als besonders vorteilhaft erwiesen, wenn die Öffnung des Rahmens zwischen 100° und 130° des queraxialen Umfangs um die Rotationsachse entspricht, um eine möglichst große Öffnungsweite und entsprechend einen möglichst großen Maximaldurchmesser für das Werkstück zu ermöglichen. Des Weiteren ist es von Vorteil, wenn die Schließstellung des Bügels in einem Einstellbereich, der wenigstens 45° des queraxialen Umfangs um die Rotationsachse entspricht, einstellbar ausgebildet ist. Hierbei wird eine ausreichende Einstellbarkeit der Riemenführung ermöglicht, um sowohl Werkstücke mit einem durch die Öffnungsweite bestimmten maximalen Durchmesser bzw. Umfang als Werkstücke mit einem möglichst kleinen Durchmesser bzw. Umfang bearbeiten zu können.

Die der Erfindung zugrundeliegende Aufgabe wird auch gelöst durch eine Auswuchtmaschine zum Auswuchten eines Werkstücks umfassend eine Lagereinrichtung, um das Werkstück in einer Lagerposition um eine Rotationsachse rotierbar zu lagern, sowie eine erfindungsgemäße Antriebseinrichtung.

Eine weitere Variabilität der Erfindung wird ermöglicht, wenn die Auswuchtmaschine ein Maschinenbett aufweist, auf dem die Antriebseinrichtung längsaxial verschiebbar angeordnet ist. Dadurch ist es möglich, auch unregelmäßige Werkstücke, die nur abschnittsweise einen zylindrischen Umfang aufweisen, bearbeiten zu können. Insbesondere wird dafür die Antriebseinrichtung längsaxial auf dem Maschinenbett verschoben und derart ausgerichtet, dass der Riemen an einem zylindrischen Abschnitt des Werkstücks angreifen kann. Weitere Variabilität wird dabei zudem erreicht, wenn auch die Lagereinrichtung wenigstens einseitig längsaxial verschiebbar auf dem Maschinenbett angeordnet ist, um beispielsweise die Lagerposition für das Werkstück an die Gesamtlänge des Werkstückes anzupassen.

Besondere synergistische Vorteile ergeben sich aus der Erfindung, wenn die erfindungsgemäße Auswuchtmaschine ferner eine wenigstens die Lagereinrichtung, die Lagerposition für das Werkstück sowie die Antriebseinrichtung umschließende Schutzverkleidung mit einer Be- und Entladeöffnung sowie eine Abdeckvorrichtung zum Abdecken der Be- und Entladeöffnung umfasst. Hier wird durch die beschriebene, erfindungsermöglichte kompakte Bauform der Antriebseinrichtung ermöglicht, auch die Schutzverkleidung und insbesondere die Abdeckvorrichtung entsprechend kompakt auszuführen. Dadurch wird die Ergonomie einer erfindungsgemäßen Auswuchtmaschine verbessert und die Taktzeit beim Werkstoffwechsel, die ja auch ein Öffnen und Schließen der Abdeckvorrichtung erfordert, reduziert. Da die Erfindung zudem ermöglicht, die Antriebseinrichtung ohne zusätzliche Bauraumforderung des geöffneten Bügels zu gestalten, wird eine Kollision der Abdeckvorrichtung mit dem geöffneten Bügel ausgeschlossen, so dass entsprechende Sicherheits- oder Sperrvorrichtungen entfallen können.

Die Erfindung wird nachfolgend anhand eines Ausführungsbeispiels der Erfindung näher erläutert, das in den Zeichnung dargestellt ist. Es zeigen
- Figur 1: eine Darstellung einer erfindungsgemäßen Auswuchtmaschine mit einer erfindungsgemäßen Antriebseinrichtung;
- Figur 2: eine räumliche Darstellung einer erfindungsgemäßen Antriebseinrichtung mit aufgelegtem Riemen, positioniertem Werkstück und geschlossenem Bügel aus einer ersten Betrachtungsrichtung;
- Figur 3: die in Fig. 2 dargestellte erfindungsgemäße Antriebseinrichtung aus einer zweiten Betrachtungsrichtung und
- Figur 4: die exemplarische erfindungsgemäße Antriebseinrichtung mit geöffnetem Bügel aus längsaxialer Betrachtungsrichtung.

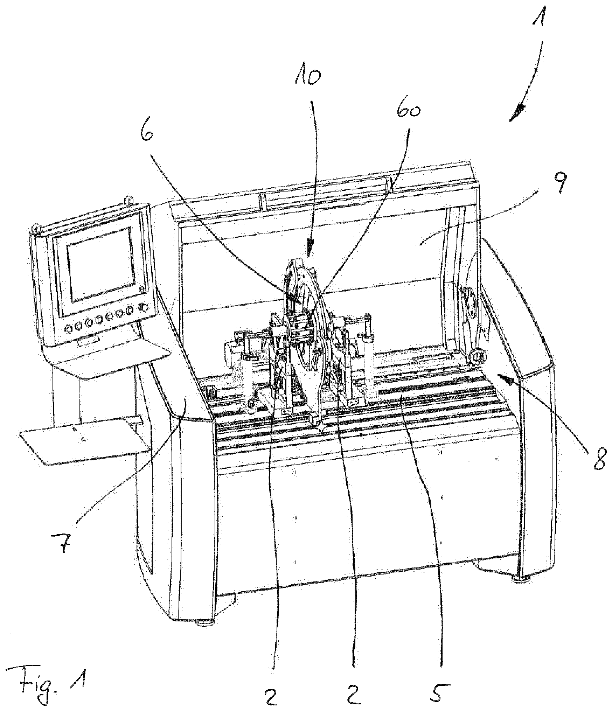

Figur 1 zeigt schematisch eine erfindungsgemäße Auswuchtmaschine 1.

Die Auswuchtmaschine 1 weist einen Arbeitsraum 8 auf, in dem auf einem Maschinenbett 5 zwei Lagervorrichtungen 2 zur rotierbaren Lagerung eines Rotors 60 in einer Lagerposition 6 angeordnet sind. Exemplarisch ist ebenfalls ein Rotor 60 gezeigt, der ohne Einschränkung der Erfindung als Radnabe dargestellt ist. Die Lagervorrichtungen 2 sind auf dem Maschinenbett 5 achsparallel zum bestimmungsgemäß angeordneten Rotor 60 verschieb- oder versetzbar, um eine Anpassung an verschiedene Rotoren 60 mit unterschiedlichen Längen vornehmen zu können.

Zwischen den beiden Lagervorrichtungen 2 ist eine erfindungsgemäße Antriebseinrichtung 10 angeordnet, um einen bestimmungsgemäß gelagerten Rotor 60 zur Prüfung auf Unwuchten gezielt in Rotation zu versetzen. Hierfür erforderliche Sensor-, Bedien- und Auswertevorrichtungen sind ebenfalls Bestandteil der erfindungsgemäßen Auswuchteinrichtung 1 und grundsätzlich bekannt. Sie werden daher aus Gründen der Übersichtlichkeit der Darstellung der Erfindung nicht detailliert diskutiert.

Die erfindungsgemäße Antriebseinrichtung 10 ist nach dem Prinzip des umschlingenden Riemenantriebs ausgeführt. Dabei greift ein Antriebsriemen 4 der Antriebseinrichtung 10 an einem Abschnitt des Rotors an, der zylindrisch geformt sein muss. Um verschiedene Rotoren 60 bearbeiten zu können, die auch sehr komplex geformt sein dürfen und nur abschnittsweise zylindrische Außenkonturen aufweisen müssen, ist die Antriebseinrichtung 10 vorzugsweise ebenfalls entlang des Maschinenbetts 5 verschiebbar oder versetzbar angeordnet.

Der Arbeitsraum 8 ist von einer Schutzverkleidung 7 umgeben und wird für den Betrieb der Auswuchtmaschine mit einer Schutzhaube 9 verschlossen. Die geöffnete Schutzhaube 9 gibt dabei, wie in Fig. 1 dargestellt, eine großzügige Be- und Entladeöffnung in der Schutzverkleidung 7 frei, um problemlos Rotoren 60 in der vorgesehenen Lagerposition 6 zu platzieren bzw. daraus zu entnehmen sowie um die verschiedenen Elemente der erfindungsgemäßen Auswuchtmaschine 1 für einen spezifischen Rotor 60 einzustellen. Die Antriebseinrichtung 10 der erfindungsgemäßen Auswuchtmaschine 1, die eigenen erfinderischen Gehalt aufweist, ermöglicht dabei vorteilhafterweise die Konstruktion einer gegenüber dem Stand der Technik kleineren und/oder leichteren Schutzhaube 9 und/oder einen geringeren Öffnungsweg derselben.

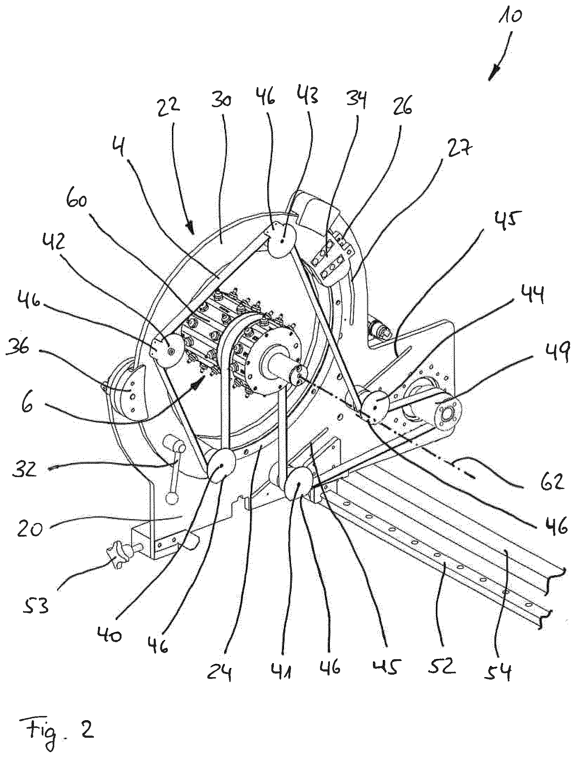

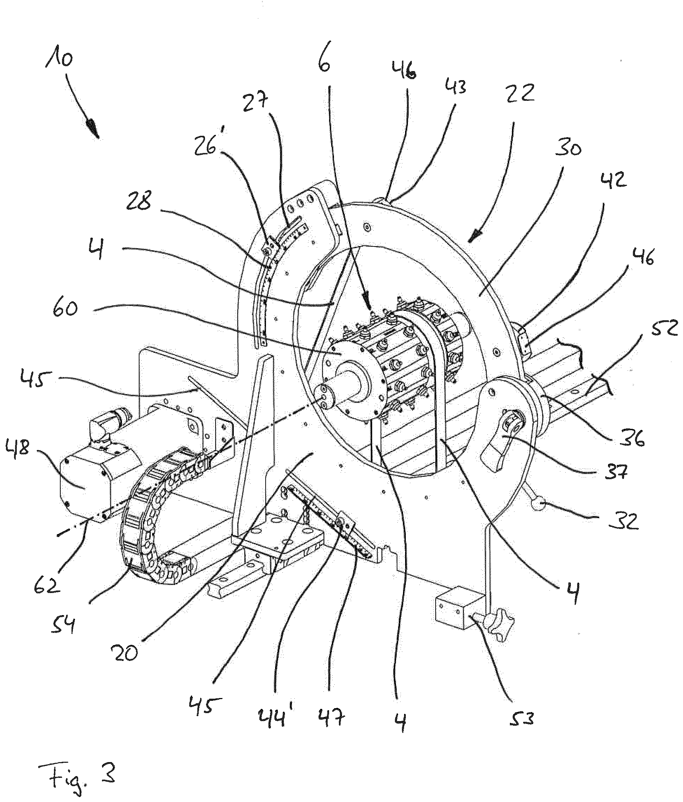

Figur 2 und 3 zeigen jeweils perspektivische Darstellungen der erfindungsgemäßen Antriebseinrichtung 10 der beispielhaften erfindungsgemäßen Auswuchtmaschine 1 aus zwei unterschiedlichen Betrachtungsrichtungen.

Die Antriebseinrichtung 10 umfasst einen Rahmen 20, der eine Lagerposition 6 für ein auszuwuchtendes Werkstück umschließt. Exemplarisch ist auch hier ein Rotor 60 gezeigt. Ebenfalls schematisch dargestellt ist eine Rotationsachse 62 des Rotors 60, wobei der Rahmen 20 quer zu der Rotationsache 62 den Rotor 60 teilweise umschließt.

Der Rahmen 20 weist eine Öffnung 22 auf, um einen Rotor 60 in die dafür vorgesehenen, maßgeblich durch die Lagervorrichtungen 2 vorgegebene und von dem Rahmen 20 umschlossene Lagerposition 6 einlegen bzw. daraus entnehmen zu können.

Zum Verschließen der Öffnung 22 ist ein Bügel 30 vorgesehen. Der Bügel 30 ist dabei mittels einer Lagerung 34 an einer am Rahmen 20 befestigten Schiene 24 gehaltert und entlang der Schiene 24 verschiebbar gelagert. Zur einfacheren und sicheren Handhabung weist der Bügel 30 beispielhaft einen Betätigungshebel 32 oder einen anderen Handgriff auf.

In Schließstellung wird der Bügel 30 lösbar arretiert, so dass der Rahmen 20 und der geschlossene Bügel 30 mittels der Lagerung 34 einerseits und einer geeigneten Arretierung 36 anderseits eine mechanisch stabile und belastbare, die Lagerposition bzw. den Rotor 60 umschließende, Struktur ausbilden. Die Arretierung 36 ist in dem dargestellten Ausführungsbeispiel der Erfindung exemplarisch als Klemmarretierung ausgebildet, die mittels eines Exzenterspannhebels 37 vorspannbar ist und dann den Bügel 30 in Schließstellung reibschlüssig arretiert.

Zum Auswuchten wird der Rotor 60 um die vorgesehene Rotationsachse 62 in Rotation versetzt. Dies erfolgt mittels eines am Rahmen befestigten Motors 48, der über eine Riemenscheibe 49 einen geschlossenen oder endlosen Antriebsriemen 4 antreibt. Der Antriebsriemen 4 wird über Führungsrollen 40, 41, 42 am Rahmen 20 bzw. am Bügel 30 derart geführt, dass der Rotor 60 in einem zylindrischen Bereich von dem Riemen 4 umschlungen und so durch den umlaufenden Riemen 4 angetrieben wird.

In dem exemplarisch gezeigten Ausführungsbeispiel der Erfindung wird der Riemen 4 insbesondere zwischen einer ersten Führungsrolle 40 am Bügel 30 und einer zweiten Führungsrolle 41 über den Rotor 60 geführt. Je nach Umlaufrichtung des Riemens läuft der Riemen somit von der ersten Führungsrolle 40 aufwärts, dann über den Rotor und wieder abwärts zur zweiten Führungsrolle 41 oder umgekehrt.

Weitere Führungsrollen 42, 43 sind vorgesehen und geeignet angeordnet, um die Riemen in einem geschlossenen Umlauf mit definierter Riemenführung zwischen der ersten Führungsrolle 40, der Riemenscheibe 49 sowie der zweiten Führungsrolle 41 zu führen. Die Führungsrollen 42 und 43 sind dabei exemplarisch derart am Bügel angeordnet, dass der Riemen in ausreichendem Abstand außen um den Rotor 60 herum geführt wird.

Die erste Führungsrolle 40 am Bügel 30 ist dabei beispielsweise an dem freien Ende des Bügels 30, d.h. insbesondere an dessen der Lagerung 34 entgegengesetzten Ende, angeordnet. Eine Verlagerung der Schließstellung des Bügels 30 führt dabei zu einer Verlagerung der ersten Führungsrolle 40 und zu einer veränderten Riemenführung zum bzw. vom Rotor 60. Insbesondere ist dabei eine Anpassung der Riemenführung an den Durchmesser des Rotors 60 ermöglicht, so dass insbesondere für beliebige Rotordurchmesser eine besonders vorteilhafte lotrechte Riemenführung zwischen erster Führungsrolle 40 und Rotor 60 ermöglicht ist.

Bei der exemplarisch gezeigten erfindungsgemäßen Antriebseinrichtung 10 ist die gewünschte Schließstellung des Bügels 30 mittels eines verschiebbaren Anschlags 26 am Rahmen 20 reproduzierbar vorgebbar, wobei beispielsweise eine Skala 28 entlang des Verschiebeweges auch nach Verstellen des Anschlags 26 eine einmal definierte Schließstellung mit hoher Genauigkeit neu eingestellt werden kann. Eine konstruktiv einfache Lösung besteht exemplarisch darin, den Anschlag 26 mit einer geeigneten Kontervorrichtung 26' entlang eines Schlitzes 28 kontinuierlich zu verschieben und durch Verspannen von Anschlag 26 und Konterelement 26' im Schlitz an der gewünschten Position festzusetzen.

In vergleichbarer Weise ist bei dem gezeigten Ausführungsbeispiel die Riemenführung zwischen dem Rotor 60 und der zweiten Führungsrolle 41 anpassbar, indem die Lager der zweiten Führungsrolle 41 am Rahmen 20 verschiebbar ausgeführt ist. Auch hier kann eine Skala 47 zu Vereinfachung der Einstellung vorgesehen sein. Eine einfache konstruktive Lösung besteht exemplarisch darin, die Achse der Führungsrolle 41 in einem Schlitz 45 mit einer geeigneten Kontervorrichtung 44' lösbar zu verspannen.

Eine lageveränderbare Spannrolle 44 ist zudem vorgesehen, um die Riemenspannung vorzugeben. Ein vergleichsweise großer Einstellungsbereich erlaubt es außerdem, ein sehr breites Spektrum an möglichen Rotordurchmessern mit nur einem einzigen Riemen 4 vorgegebener Länge abdecken zu können.

Riemenleitbleche 46 an den Führungsrollen 40, 41, 42, 43 sowie der Spannrolle 44 verhindern ein unbeabsichtigtes Abspringen des Riemen, sind jedoch bevorzugt derart angeordnet, dass sie den bestimmungsgemäß umlaufenden Riemen 4 nicht berühren. Diese exemplarisch gezeigten Riemenleitbleche 46 können alternativ im Rahmen der Erfindung auch als anderweitige Haltevorrichtungen für den Riemen 4 ausgebildet sein; Haltevorrichtungen im allgemeinen Riemenleitbleche 46 im speziellen sind grundsätzlich von Vorteil, aber nicht essentiell für die Erfindung.

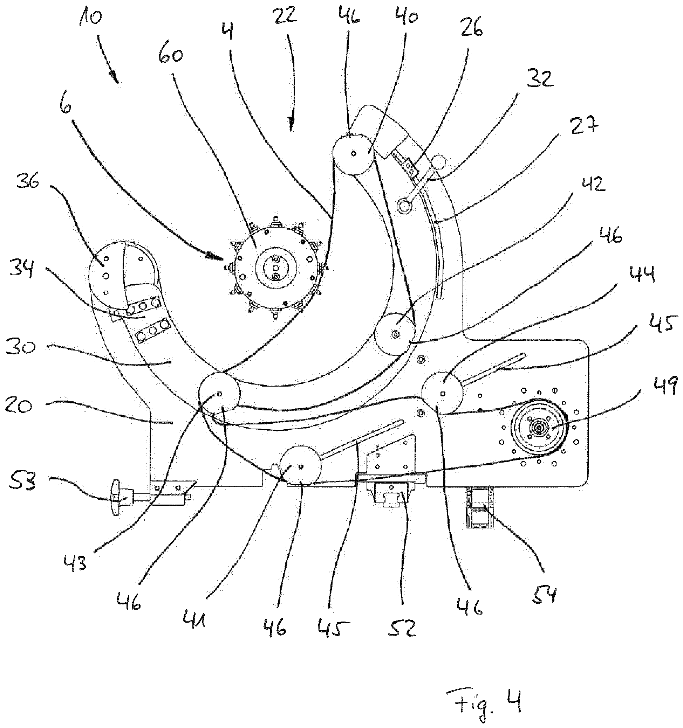

Ein weiterer Vorteil der Erfindung wird bei geöffnetem Bügel 30 ersichtlich. Diese Stellung ist in Fig. 4 dargestellt.

Durch das Riemenleitblech 46 an der Führungsrolle 43, die am lagerseitigen Ende des Bügels 30 angeordnet ist, wird der Riemen 4 im Bereich zwischen der Führungsrolle 42 und der Spannrolle 44 bzw. der Riemenscheibe 49 beim Öffnen des Bügels mitgenommen und lose gestrafft. Statt des Riemenleitblechs 46 an der Führungsrolle 43 kann dieser Vorteil auch durch eine beliebige Führungs- oder Haltevorrichtung erreicht werden, die an dem lagerseitigen Ende des Bügels 30 angeordnet ist.

Gleichzeitig greift die Führungsrolle 43 den Riemen im Bereich zwischen der Führungsrolle 40 und der Führungsrolle 41 auf und strafft den Riemen weiter, gleichwohl ohne stramme Spannung des Riemens 4 aufzubauen. Der Riemen 4 hängt dadurch niemals durch und kann sich dadurch auch nicht unbeabsichtigt verheddern oder hängen bleiben.

Wie aus der Darstellung in Fig. 4 ebenfalls zu ersehen ist überragt der Bügel 30 in keiner Lage oder Stellung den Rahmen 20, abgesehenen natürlich von dem bestimmungsgemäßen Verschließen der Öffnung 22. Der von der Antriebseinrichtung 10 eingenommene Bauraum ist daher unabhängig von der Stellung des Bügels 30. Dadurch wird vorteilhafterweise verhindert, dass die Schutzhaube 7 mit dem geöffneten Bügel 30 kollidieren kann.

## Patentansprüche

1. Antriebseinrichtung (10) für eine Auswuchtmaschine (1) zum Antreiben einer Rotationsbewegung eines um eine Rotationsachse (62) rotierbar gelagerten Werkstückes (60) mittels eines umlaufenden Riemens (4), wobei die Antriebseinrichtung (10) einen eine Lagerposition (6) für das Werkstück (60) queraxial zu der Rotationsachse (62) wenigstens teilweise umschließenden Rahmen (20) umfasst, wobei der Rahmen (20) eine mittels eines Bügels (30) verschließbare Öffnung (22), durch die die Lagerposition (6) zugänglich ist, aufweist, wobei die Antriebseinrichtung (10) an dem Rahmen (20) und/oder dem Bügel (30) angeordnete Führungsvorrichtungen (40, 41, 42, 43) umfasst, um den Riemen (4) derart zu führen, dass ein in der Lagerposition (6) befindliches Werkstück (60) an einem zylindrischen Umfangsbereich bei geschlossenem Bügel (30) von dem Riemen (4) wenigstens teilweise umschlungen wird und wobei die Antriebseinrichtung (10) ferner eine Antriebsvorrichtung (48, 49) für den Riemen aufweist, **dadurch gekennzeichnet, dass** der Bügel (30) zwischen einer Offenstellung und einer Schließstellung verschiebbar am Rahmen (20) gehaltert ist.

2. Antriebseinrichtung nach Anspruch 1, **dadurch gekennzeichnet, dass** eine Massenverteilung des Bügels (30) und aller mit dem Bügel (30) mitbewegbarer Bauteile der Antriebseinrichtung (10) derart ausbalanciert sind, dass ein aufgrund der Massenverteilung wirkendes Gravitationsmoment nicht ausreicht, um eine einem Verschieben des Bügels (30) entgegenwirkende Reibungskraft zu überwinden.

3. Antriebseinrichtung (10) nach einem der Ansprüche 1 oder 2, **dadurch gekennzeichnet, dass** eine erste der Führungsvorrichtungen (40) am Bügel (30) angeordnet ist und eine zweite die Führungsvorrichtungen (41) am Rahmen (20) angeordnet ist, wobei insbesondere der bestimmungsgemäß eingesetzte Riemen (4) bei geschlossenem Bügel (30) zwischen der ersten Führungsvorrichtung (40) und der zweiten Führungsvorrichtung (41) über das bestimmungsgemäß gelagerte Werkstück (60) geführt wird.

4. Antriebseinrichtung (10) nach einem der Ansprüche 1 bis 3, **dadurch gekennzeichnet, dass** am Rahmen (20) eine kreisbogenförmige Schiebeführung (24) für den Bügel (30) angeordnet ist.

5. Antriebseinrichtung (10) nach Anspruch 4, **dadurch gekennzeichnet, dass** der Rahmen (20) und der Bügel (30) die Lagerposition (6) für das Werkstück (60) im Wesentlichen konzentrisch zur Rotationsachse (62) umschließen.

6. Antriebseinrichtung (10) nach Anspruch 3 und einem der Ansprüche 4 oder 5, **dadurch gekennzeichnet, dass** eine weitere Führungsvorrichtung (43) am Bügel (30) angeordnet ist, wobei insbesondere die erste Führungsvorrichtung (40) und die weitere Führungsvorrichtung (43) an gegenüberliegenden Bereichen des Bügels (30) angeordnet sind.

7. Antriebseinrichtung (10) nach einem der Ansprüche 5 oder 6, **dadurch gekennzeichnet, dass** die Öffnung (22) des Rahmens (20) zwischen 100° und 130° des queraxialen Umfangs um die Rotationsachse (62) entspricht, wobei insbesondere die Schließstellung des Bügels (30) in einem Einstellbereich, der wenigstens 45° des queraxialen Umfangs um die Rotationsachse (62) entspricht, einstellbar ausgebildet ist.

8. Auswuchtmaschine (1) zum Auswuchten eines Werkstücks (60) umfassend eine Lagereinrichtung (2), um das Werkstück (60) in einer Lagerposition (6) um eine Rotationsachse (62) rotierbar zu lagern, sowie eine Antriebseinrichtung (10) nach einem der Ansprüche 1 bis 7.

9. Auswuchtmaschine (1) nach Anspruch 8, **dadurch gekennzeichnet, dass** die Auswuchtmaschine (1) ferner eine wenigstens die Lagereinrichtung (2), die Lagerposition (6) für das Werkstück (60) sowie die Antriebseinrichtung (10) umschließende Schutzverkleidung (7) mit einer Be- und Entladeöffnung sowie eine Abdeckvorrichtung (9) zum Abdecken der Be- und Entladeöffnung umfasst.

## Claims

1. Drive apparatus (10) for a balancing machine (1) for driving rotational movement of a workpiece (60), which is rotatably mounted about an axis of rotation (62), by means of a looping belt (4), wherein the drive apparatus (10) comprising a frame (20) which, transaxially to the axis of rotation (62), surrounds a mounting position (6) for the workpiece (60) at least in part, wherein the frame (20) having an opening (22) which can be closed by means of an arch (30) and through which the mounting position (6) is accessible, wherein the drive apparatus (10) comprising guide devices (40, 41, 42, 43) arranged on the frame (20) and/or the arch (30), in order to guide the belt (4) such that, when the arch (30) is closed, the belt (4) winds around a workpiece (60) in the mounting position (6) on a cylindrical circumferential region of said workpiece at least in part, and wherein the drive apparatus (10) further comprising a drive device (48, 49) for the belt, **characterised in that** the arch (30) is held on the frame (20) so as to be movable between an open position and a closed position.

2. Drive apparatus according to claim 1, **characterised in that** the mass distribution of the arch (30) and all the components of the drive apparatus (10) that are movable together with the arch (30) are balanced such that the gravitational torque acting on account of the mass distribution is not sufficient to overcome a frictional force acting counter to movement of the arch (30).

3. Drive apparatus (10) according to either claim 1 or claim 2, **characterised in that** a first of the guide devices (40) is arranged on the arch (30), and a second of the guide devices (41) is arranged on the frame (20), the belt (4) used as intended in particular being guided over the workpiece (60), mounted as intended, between the first guide device (40) and the second guide device (41) when the arch (30) is closed.

4. Drive apparatus (10) according to any of claims 1 to 3, **characterised in that** an arc-shaped sliding guide (24) for the arch (30) is arranged on the frame (20).

5. Drive apparatus (10) according to claim 4, **characterised in that** the frame (20) and the arch (30) surround the mounting position (6) for the workpiece (60) substantially concentrically with the axis of rotation (62).

6. Drive apparatus (10) according to claim 3 and either claim 4 or claim 5, **characterised in that** a further guide device (43) is arranged on the arch (30), the first guide device (40) and the further guide device (43) in particular being arranged on opposite regions of the arch (30).

7. Drive apparatus (10) according to either claim 5 or claim 6, **characterised in that** the opening (22) in the frame (20) corresponds to between 100° and 130° of the transaxial periphery of the axis of rotation (62), wherein the closed position of the arch (30) in particular being designed so as to be adjustable within an adjustment range, which corresponds to at least 45° of the transaxial periphery of the axis of rotation (62).

8. Balancing machine (1) for balancing a workpiece (60), comprising a mounting apparatus (2) in order to rotatably mount the workpiece (60) about an axis of rotation (62) in a mounting position (6), and comprising a drive apparatus (10) according to any of claims 1 to 7.

9. Balancing machine (1) according to claim 8, **characterised in that** the balancing machine (1) further comprises a protective case (7), which surrounds at least the mounting apparatus (2), the mounting position (6) for the workpiece (60) and the drive apparatus (10) and has a loading and unloading opening, and a cover device (9) for covering the loading and unloading opening.

## Revendications

1. Dispositif d'entraînement (10) pour une machine d'équilibrage (1) pour entraîner un mouvement de rotation d'une pièce (60), qui est logée rotative autour d'un axe de rotation (62), au moyen d'une courroie circulaire (4), le dispositif d'entraînement (10) comprenant un cadre (20) qui entoure au moins partiellement et transversalement à l'axe de rotation (62) une position de palier (6) pour la pièce (60), le cadre (20) étant muni d'une ouverture (22) qui peut être fermée au moyen d'un arceau (30) et à travers laquelle la position de palier (6) est accessible, le dispositif d'entraînement (10) étant muni de dispositifs de guidage (40, 41, 42, 43) disposés sur le cadre (20) et/ou sur l'arceau (30) afin de guider la courroie (4) de telle manière qu'une pièce (60) se trouvant dans la position de palier (6) est enlacée au moins partiellement par la courroie (4) sur une zone périphérique cylindrique lorsque l'arceau (30) est fermé, et le dispositif d'entraînement (10) étant en outre muni d'un dispositif d'entraînement (48, 49) pour la courroie, **caractérisé en ce que** l'arceau (30) est supporté sur le cadre (20) de manière déplaçable entre une position ouverte et une position fermée.

2. Dispositif d'entraînement selon la revendication 1, **caractérisé en ce qu'**une répartition des masses de l'arceau (30) et de tous les composants du dispositif d'entraînement (10) qui peuvent être déplacés avec l'arceau (30) est équilibrée de telle manière qu'un moment de gravité agissant en raison de la répartition des masses n'est pas suffisant pour surmonter une force de frottement s'opposant à un déplacement de l'arceau (30).

3. Dispositif d'entraînement (10) selon l'une des revendications 1 ou 2, **caractérisé en ce qu'**un premier des dispositifs de guidage (40) est disposé sur l'arceau (30) et un deuxième des dispositifs de guidage (41) est disposé sur le cadre (20), la courroie (4) utilisée de manière conforme étant notamment guidée, lorsque l'arceau (30) est fermé, entre le premier dispositif de guidage (40) et le deuxième dispositif de guidage (41) en passant par la pièce (60) logée de manière conforme.

4. Dispositif d'entraînement (10) selon l'une des revendications 1 à 3, **caractérisé en ce qu'**un guidage de coulissement (24) pour l'arceau (30) en forme d'arc de cercle est disposé sur le cadre (20).

5. Dispositif d'entraînement (10) selon la revendication 4, **caractérisé en ce que** le cadre (20) et l'arceau (30) entourent la position de palier (6) pour la pièce (60) de manière sensiblement concentrique à l'axe de rotation (62).

6. Dispositif d'entraînement (10) selon la revendication 3 et l'une des revendications 4 ou 5, **caractérisé en ce qu'**un dispositif de guidage supplémentaire (43) est disposé sur l'arceau (30), le premier dispositif de guidage (40) et le dispositif de guidage supplémentaire (43) étant notamment disposés sur des zones opposées de l'arceau (30).

7. Dispositif d'entraînement (10) selon l'une des revendications 5 ou 6, **caractérisé en ce que** l'ouverture (22) du cadre (20) correspond à un angle compris entre 100° et 130° de la circonférence transversale à l'axe autour de l'axe de rotation (62), la position fermée de l'arceau (30) étant notamment réglable dans une plage de réglage correspondant à au moins 45° de la circonférence transversale à l'axe autour de l'axe de rotation (62).

8. Machine d'équilibrage (1) pour équilibrer une pièce (60), comprenant un dispositif de palier (2) pour loger la pièce (60) dans une position de palier (6) de manière rotative autour d'un axe de rotation (62), ainsi qu'un dispositif d'entraînement (10) selon l'une des revendications 1 à 7.

9. Machine d'équilibrage (1) selon la revendication 8, **caractérisée en ce que** la machine d'équilibrage (1) est munie en outre d'un carter de protection (7) qui enferme au moins le dispositif de palier (2), la position de palier (6) pour la pièce (60) ainsi que le dispositif d'entraînement (10) et qui a une ouverture de chargement et de déchargement, et d'un dispositif de recouvrement (9) pour recouvrir l'ouverture de chargement et de déchargement.
